# FASCICULE DE BREVET EUROPEEN

(11) **EP 1 441 507 B1**
(45) Date de publication et mention de la délivrance du brevet: **08.06.2011**
(21) Numéro de dépôt: 03293234.5
(22) Date de dépôt: 19.12.2003
(51) Int. Cl.: H04N 3/14, G01S 7/486

(54) **Procédé de détection d'un signal lumineux et chaine de détection lidar**
Verfahren zur Detektion eines Lichtsignals und Lidar-Detektionskette
Method for detecting a light signal and lidar detection chain

(30) Priorité: 21.01.2003 FR 0300600
(43) Date de publication de la demande: 28.07.2004
(73) Titulaire: Alcatel Lucent, 75008 Paris (FR)
(72) Inventeur: Pain, Thierry, 06250 Mougins (FR); Krawczyk, Rodolphe, Résidence du Parc de Vaugrenier, 06270 Villeneuve Loubet (FR)
(74) Mandataire: Esselin, Sophie

(56) Documents cités:
- EP-A- 1 099 405
- EP-A- 1 111 908
- US-A- 4 757 200
- US-B1- 6 444 968

## Description

Le sujet de cette invention est un procédé de détection d'un signal lumineux, ainsi qu'une chaîne lidar correspondante.

Les chaînes de détection à lidar comprennent essentiellement, synchronisés, un moyen tel qu'un laser d'émission d'un signal lumineux vers un objet à étudier et un dispositif de réception d'un signal renvoyé par l'objet par diffusion ou réflexion. L'exploitation du signal renvoyé permet de déduire certaines caractéristiques de l'objet. Le problème abordé ici est la fourniture d'un signal d'intensité suffisante pour être lu par les moyens d'exploitation. Dans certaines chaînes de détection connues à lidar, on utilise un procédé de comptage dans lequel les photons sont individuellement convertis en électrons dans un détecteur, avec un facteur de multiplication connu et suffisant pour distinguer le signal du bruit de fond de la chaîne. Ce procédé est cependant limité à des signaux très faibles. Un autre procédé consiste à faire passer par un amplificateur de courant précédant les moyens d'exploitation le signal provenant de la conversion des photons en charges électriques. Comme le bruit de fond de la chaîne subit la même amplification, ce procédé n'est convenable que pour des valeurs élevées de signal. Dans la pratique, plusieurs chaînes de détection dont les calibrations sont différentes doivent être utilisées quand les valeurs successives échantillonnées du signal prennent des intensités différentes.

Les brevets EP 0 905 284 et 1 111 908 font apparaître un capteur photosensible à couplage et accumulation de charges, dit CCD et qui comprend un réseau de cellules rangées en lignes et en colonnes. Le signal lumineux est d'abord recueilli sur une zone d'image et converti en charges électriques qu'on déplace périodiquement à travers une zone de mémoire avant qu'elles n'arrivent à un dispositif de lecture.

Ce capteur présente l'intérêt de se prêter à un échantillonnage commode du signal sur les lignes de mémoire ; mais il ne résout pas le problème de dépasser le bruit de lecture pour des échantillons d'intensités faibles. Dans ces brevets, on procède, outre à une intégration des charges sur la dernière ligne de la zone d'image, à une intégration d'échantillons correspondants de tirs successifs dans la zone de mémoire avant de procéder à la lecture. On ne peut donc plus exploiter un tir particulier et une bonne synchronisation des tirs est requise. Si une partie du signal est biaisée, l'ensemble des échantillons est affecté par l'erreur et perdu. Des saturations de cellules sont aussi à craindre pour les échantillons élevés qu'on accumule.

L'invention concerne une amélioration des chaînes lidar en recourant à des capteurs photosensibles CCD qui se distinguent de ceux qu'on connaît dans cette application en ce qu'ils amplifient le signal dans des conditions à la fois sûres et moins contraignantes qu'en accumulant plusieurs tirs.

L'amplification du signal a lieu dans la zone de lecture au lieu de la zone de mémoire, et par un procédé de multiplication des charges qui permet de considérer les résultats individuels des tirs.

Un aspect de l'invention est ainsi une chaîne de détection lidar comprenant un dispositif d'émission d'un signal lumineux, un dispositif de transmission d'une portion renvoyée du signal lumineux vers un capteur qui la convertit en un signal électrique, dans laquelle le capteur est composé de cellules réparties en lignes et en colonnes et comprend successivement une zone d'image comprenant au moins une des lignes de cellules et sur laquelle ladite portion du signal lumineux est focalisée, une zone de mémoire comprenant une pluralité des lignes des cellules et une zone de lecture comprenant une ligne de cellules ; les cellules de la zone d'image étant photosensibles et convertissant ladite portion renvoyée du signal lumineux en charges électriques, et les cellules de la zone de mémoire n'étant pas photosensibles ; et des moyens de cadencement pour déplacer les charges électriques le long des colonnes, de la zone d'image à la zone de mémoire puis à la zone de lecture et vers un dispositif d'exploitation ; les cellules de la zone de lecture étant multiplicatrices des charges électriques.

Aucun amplificateur autre n'est nécessaire dans la chaîne. Un autre aspect de l'invention est un procédé de détection d'un signal lumineux, comprenant une conversion continuelle du signal lumineux en charges électriques dans une portion réceptrice d'un capteur, des échantillonnages périodiques du signal en prélevant les charges accumulées dans la portion réceptrice pour en former des échantillons du signal, et des déplacements des échantillons en chaîne de la zone d'image, à travers une mémoire puis vers un dispositif d'exploitation, dans lequel les échantillons subissent une amplification par multiplication des charges électriques dans le capteur juste avant d'être déplacés vers le dispositif d'exploitation mais restent inchangés dans la mémoire.

L'invention sera maintenant décrite au moyen des figures suivantes :
- la figure 1 est une vue générale d'un dispositif de détection lidar équipé de l'invention,
- et la figure 2 est une illustration du capteur CCD utilisé dans l'invention.

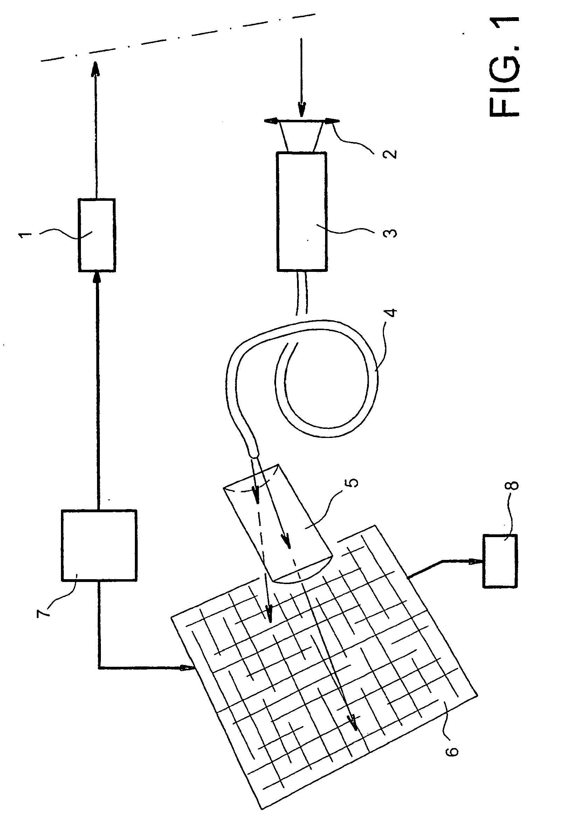

Le dispositif de détection lidar illustré à la figure 1 comprend un moyen d'illumination consistant en un laser 1 émettant son rayon vers l'objet (non représenté mais pouvant être un nuage ou un panache de gaz d'après des applications fréquentes) à étudier. Le rayonnement réfléchi ou diffusé par l'objet est reccueilli par un dispositif de transmission, et d'abord par une optique de réception 2. Il peut recevoir un premier traitement par un interféromètre 3. Le signal lumineux passe ensuite par une fibre optique 4 et une lentille cylindrique 5 avant d'arriver au capteur 6 qui le convertit en signal électrique échantillonné. Un moyen de cadencement 7 commande à la fois les tirs du laser 1 et le service du capteur 6. Un moyen d'exploitation 8 lit le signal électrique traité par le capteur 6.

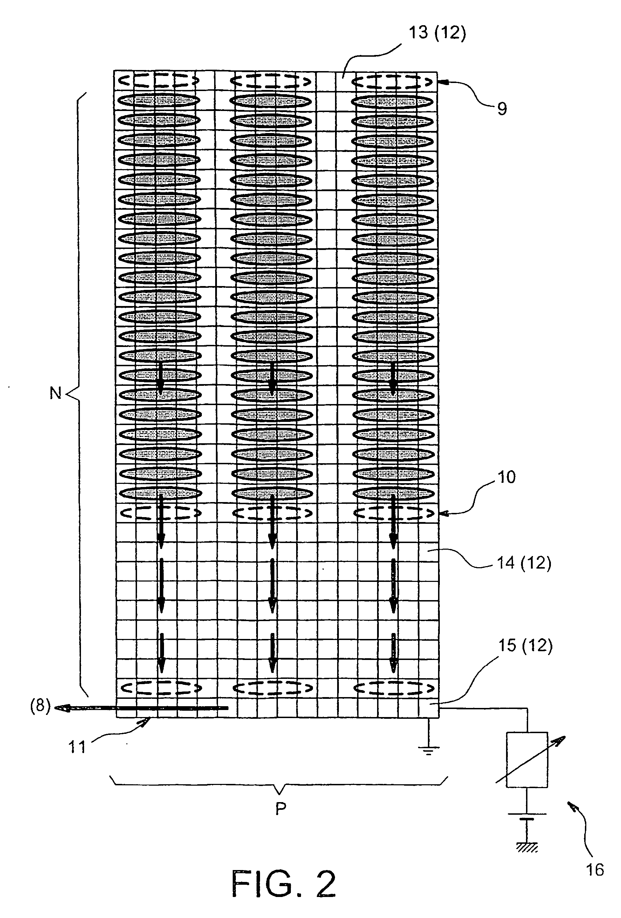

Le capteur 6 est illustré à la figure 2. Il comprend une zone d'image 9, une zone de mémoire 10 et une zone de lecture 11 qui sont contiguës et se présentent en matrices de cellules 12 dont les natures sont différentes dans chacune des zones, où elles portent donc les références 13, 14 et 15. Les cellules 12 sont arrangées en P colonnes s'étendant à travers les trois zones 9, 10 et 11. La zone de mémoire 10 comprend N lignes des cellules 14, la zone de lecture 11 une ligne unique des cellules 15, et la zone d'image 9 comprend avantageusement une seule ligne des cellules 13, bien qu'on puisse en employer plusieurs par imitation de capteurs antérieurs afin de capter simultanément plusieurs sources lumineuses distinctes.

A la réception d'un tir renvoyé, le signal lumineux parvient au capteur 6 sous forme d'une tache s'allongeant en ligne droite grâce à la focalisation particulière (allongement dans le sens des lignes et contraction dans le sens des colonnes) opérée par la lentille 5. Cette ligne a une largeur avantageusement inférieure à celles des cellules 13, pour être reçue sur la ligne unique de celles-ci dans la zone d'image 9. L'extension latérale de la tache lumineuse est faite sur un nombre de colonnes suffisant pour éviter de risquer de saturer l'une ou l'autre des cellules 13. On a ici représenté plusieurs taches lumineuses voisines, le capteur 6 pouvant être affecté au recueil et au traitement simultanées de différents signaux lumineux provenant de canaux respectifs et délivrés par des fibres optiques parallèles, ainsi qu'il est courant pour des analyses à des longueurs d'onde différentes.

Les cellules 13 sont des cellules photosensibles qui convertissent les photons en charges électriques et les laissent s'accumuler. Il est inutile de procéder à une accumulation supplémentaire des charges le long de colonnes si la zone d'image 9 comporte plusieurs lignes, ce qui est connu dans l'art pour élever les valeurs échantillonnées. Périodiquement, les moyens de cadencement 7 commandent le capteur 6. Les contenus des cellules 12 sont alors prélevés et déplacés à la ligne de cellules 12 immédiatement inférieure. Les charges accumulées sont donc transférées des cellules 13 de la zone d'image 9 dans la ligne supérieure de la zone de mémoire 10 dans les lignes suivantes de la zone de mémoire 10 et remplacées par les charges accumulées ensuite dans la zone d'image 9. En répétant ce procédé, on emmagasine un échantillonnage du signal renvoyé dans la zone de mémoire 10, les lignes inférieures correspondant à des instants d'échantillonnage antérieurs. Les cellules 14 de la zone de mémoire 10 sont conçues pour permettre ces transferts mais ne sont pas photosensibles. En pratique, elles peuvent être de même composition que la cellule 13 mais masquées par un revêtement opaque.

Quand le signal a été échantillonné, sa lecture peut être entreprise en continuant les transferts des charges vers le bas des colonnes des cellules 12, jusqu'à ce qu'elles parviennent aux cellules 15 de la zone de lecture 11. Elles subissent là une multiplication redevable à une augmentation de leur tension de commande, à 50V au lieu de 5V par exemple, qui les amplifie. Le bruit qui est amplifié également est celui des cellules 12, qui est faible. Les échantillons du signal dans la zone de lecture 11 restent ainsi représentatifs du signal lumineux renvoyé, et il n'est plus besoin de procéder à des accumulations d'échantillons sur des tirs répétés pour pallier un faible niveau du signal. Si au contraire le signal est élevé, la saturation des cellules 14 de la zone de mémoire 10 est évitée. Il est encore possible de régler le taux de multiplication des charges dans la zone de lecture 11 en agissant sur le moyen de réglage 16 de la tension de commande de leurs cellules 15.

Enfin, les charges multipliées sont vidées cellule par cellule en étant fournies au moyen d'exploitation 8 qui les numérise.

## Revendications

1. Chaîne de détection lidar comprenant un dispositif d'émission (1) d'un signal lumineux, un dispositif de transmission d'une portion renvoyée du signal lumineux vers un capteur (6) qui la convertit en un signal électrique, dans laquelle le capteur est composé de cellules (12) réparties en lignes et en colonnes et comprend successivement une zone d'image (9) comprenant au moins une des lignes de cellules et sur laquelle ladite portion du signal lumineux est focalisée, une zone de mémoire (10) comprenant une pluralité des lignes des cellules et une zone de lecture (11) comprenant une ligne de cellules ; les cellules de la zone d'image étant photosensibles et convertissant ladite portion renvoyée du signal lumineux en charges électriques, et les cellules de la zone de mémoire n'étant pas photosensibles ; et des moyens de cadencement (7) pour déplacer les charges électriques le long des colonnes, de la zone d'image à la zone de mémoire puis à la zone de lecture et vers un dispositif d'exploitation (8) ; les cellules de la zone de lecture étant multiplicatrices des charges électriques.

2. Chaîne de détection lidar selon la revendication 1, dans laquelle la zone de mémoire comprend une ligne unique des cellules et le dispositif de transmission comprend une lentille de focalisation (5) de ladite portion renvoyée du signal lumineux en la contractant en direction des colonnes et en la dilatant en direction des lignes.

3. Chaîne de détection lidar selon l'une quelconque des revendications 1 ou 2, comprenant un moyen de réglage (16) de la tension de commande des cellules de la zone de lecture.

4. Procédé de détection d'un signal lumineux, comprenant une conversion continuelle du signal lumineux en charges électriques dans une portion réceptrice (9) d'un capteur (6), des échantillonnages périodiques du signal en prélevant les charges accumulées dans la portion réceptrice pour en former des échantillons du signal, et des déplacements des échantillons en chaîne à travers une mémoire puis vers un dispositif d'exploitation (8), dans lequel les échantillons subissent une amplification dans le capteur par multiplication des charges électriques juste avant d'être déplacés vers le dispositif d'exploitation mais restent inchangés dans la mémoire.

## Claims

1. A lidar detection chain comprising a device (1) for emitting a light signal, a device for transmitting a portion emanating from said light signal to a sensor (6) which converts said portion into an electric signal, wherein the sensor is composed of cells (12) arranged in lines and in columns and successively comprises an image zone (9) comprising at least one of the lines of cells and on which said portion of the light signal is focussed, a memory zone (10) comprising a plurality of the lines of the cells and a read zone (11) comprising one line of cells, the cells of the image zone being light sensitive and converting said portion emanating from the light signal into electric charges, and the cells of the memory zone being light insensitive, and cadence means (7) for moving the electric charges along the columns from the image zone to the memory zone and then to the read zone and to a user device (8); the cells of the read zone reproducing the electric charges.

2. The lidar detection chain according to claim 1, wherein the memory zone comprises a single line of cells and the transmission device comprises a lens (5) for focussing said portion emanating from the light signal by contracting it in the direction of the columns and dilating it in the direction of the lines.

3. The lidar detection chain according to any one of claims 1 to 2, comprising a means for adjusting (16) the control voltage of the cells of the read zone.

4. A process for detecting a light signal, comprising continuously converting the light signal into electric charges in a receiving portion (9) of a sensor (6), periodically sampling the signal by sampling the charges accumulated in the receiving portion so as to form therefrom samples of the signal, and moving the samples in a chain through a memory and then towards a user device (8), wherein the samples are subject to amplification in the sensor by multiplication of the electric charges immediately before being moved towards the user device, but remain unchanged in the memory.

## Patentansprüche

1. Lidar-Detektionskette, die Folgendes umfasst: eine Vorrichtung (1) zum Emittieren eines Lichtsignals, eine Vorrichtung zum Übertragen eines von dem Lichtsignal kommenden Teils zu einem Sensor (6), der ihn in ein elektrisches Signal umwandelt, wobei der Sensor aus in Reihen und Spalten angeordneten Zellen (12) zusammengesetzt ist und hintereinander Folgendes umfasst: eine Bildzone (9), die wenigstens eine der Zellenreihen umfasst und auf der der Teil des Lichtsignals fokussiert ist, eine Speicherzone (10), die mehrere der Zellenreihen umfasst, und eine Lesezone (11), die eine Reihe von Zellen umfasst, wobei die Zellen der Bildzone lichtempfindlich sind und den vom Lichtsignal kommenden Teil in elektrische Ladungen umwandelt und wobei die Zellen der Speicherzone nicht lichtempfindlich sind, und Kadenzierungsmittel (7) zum Verschieben der elektrischen Ladungen entlang der Spalten von der Bildzone zur Speicherzone und dann zur Lesezone und zu einer Betriebsvorrichtung (8); wobei die Zellen der Lesezone die elektrischen Ladungen reproduzieren.

2. Lidar-Detektionskette nach Anspruch 1, wobei die Speicherzone eine einzelne Zellenreihe umfasst und die Übertragungsvorrichtung eine Linse (5) zum Fokussieren des von dem Lichtsignal kommenden Teils durch Kontraktion in Richtung der Spalten und durch Dilatation in Richtung der Reihen umfasst.

3. Lidar-Detektionskette nach Anspruch 1 oder 2, die ein Mittel zum Regeln (16) der Steuerspannung der Zellen der Lesezone umfasst.

4. Verfahren zum Detektieren eines Lichtsignals, das Folgendes beinhaltet:
kontinuierliches Umwandeln des Lichtsignals in elektrische Ladungen in einem Empfangsteil (9) eines Sensors (6), periodisches Abtasten des Signals durch Abtasten der im Empfangsteil akkumulierten Ladungen, um Samples des Signals zu bilden, und Verschieben der Samples in einer Kette durch einen Speicher und dann weiter zu einer Betriebsvorrichtung (8), wobei die Samples im Sensor durch Multiplizieren der elektrischen Ladungen unmittelbar vor deren Verschiebung zur Betriebsvorrichtung verstärkt werden, aber unverändert im Speicher bleiben.
